# EUROPEAN PATENT APPLICATION

(11) **EP 4 664 173 A1**
(43) Date of publication of application: **17.12.2025**
(21) Application number: 24753389.6
(22) Date of filing: 07.02.2024
(51) Int. Cl.: G02B 6/44

(54) **OPTICAL FIBER CABLE AND OPTICAL FIBER UNIT**

(30) Priority: 08.02.2023 JP 2023017611
(71) Applicant: SUMITOMO ELECTRIC INDUSTRIES, LTD., Osaka-shi, Osaka 541-0041 (JP)
(72) Inventor: KIMURA, Toyoaki, Osaka-shi, Osaka 541-0041 (JP); SATO, Fumiaki, Osaka-shi, Osaka 541-0041 (JP); TAKAHASHI, Ken, Osaka-shi, Osaka 541-0041 (JP)
(74) Representative: Müller-Boré & Partner Patentanwälte PartG mbB
(86) International application number: PCT/JP2024/004114
(87) International publication number: WO 2024/166946

(57) **Abstract**

This optical fiber cable comprises, a plurality of optical fiber ribbons, a plurality of water absorbing members, and an outer covering that covers the periphery of the plurality of optical fiber ribbons and the plurality of water absorbing members. The optical fiber ribbons each have a plurality of optical fiber cores, and a connecting resin that connects together the plurality of optical fiber cores arranged in parallel in a direction orthogonal to the longitudinal direction of the plurality of optical fiber cores. The connecting resin has at least one recess between the adjacent optical fiber cores, and the thickness of each water absorbing member is less than the center-to-center distance of two adjacent optical fiber cores in the parallel arrangement direction of the optical fiber cores.

## Description

### TECHNICAL FIELD

The present disclosure relates to an optical fiber cable and an optical fiber unit.

The present application claims priority based on Japanese Patent Application No. 2023-017611 filed on February 8, 2023, and incorporates all contents described in the Japanese Application.

### BACKGROUND ART

Patent Literature 1 discloses an optical fiber cable including an optical fiber unit assembly in which a plurality of optical fiber units are assembled. In the optical fiber unit, a plurality of optical fibers are bundled. The optical fiber cable disclosed in Patent Literature 1 includes an outer waterproofing material provided on the outer periphery of the optical fiber unit assembly and an inner waterproofing material provided inside the optical fiber unit assembly. The inner waterproofing material is a water-expandable fiber or a string-shaped member.

### CITATION LIST

### PATENT LITERATURE

Patent Literature 1: JP2013-088542A

### SUMMARY OF INVENTION

An optical fiber cable including:
a plurality of optical fiber ribbons;
a plurality of water absorption members; and
a sheath configured to cover peripheries of the plurality of optical fiber ribbons and the plurality of water absorption members,
in which each of the optical fiber ribbons includes
   a plurality of optical fibers, and
   a connecting resin configured to connect the plurality of optical fibers arranged in parallel in a direction orthogonal to a longitudinal direction of the plurality of optical fibers,
in which the connecting resin has at least one recess between the adjacent optical fibers, and
in which a thickness of each of the water absorption members is smaller than a center-to-center distance between the two adjacent optical fibers in a parallel direction of the optical fibers.

An optical fiber unit including:
one or a plurality of optical fiber ribbons;
a plurality of water absorption members; and
a unit covering portion configured to cover peripheries of the one or the plurality of optical fiber ribbons and the plurality of water absorption members,
in which each of the optical fiber ribbons includes
   a plurality of optical fibers, and
   a connecting resin configured to connect the plurality of optical fibers arranged in parallel in a direction orthogonal to a longitudinal direction of the plurality of optical fibers,
in which the connecting resin has at least one recess between the adjacent optical fibers, and
in which a thickness of each of the water absorption members is smaller than a center-to-center distance between the two adjacent optical fibers in a parallel direction of the optical fibers.

### BRIEF DESCRIPTION OF DRAWINGS

[FIG. 1] FIG. 1 is a cross-sectional view orthogonal to the longitudinal direction of an optical fiber cable according to a first embodiment.
[FIG. 2] FIG. 2 is a partially exploded view showing an optical fiber ribbon used in the optical fiber cable in the longitudinal direction.
[FIG. 3] FIG. 3 is a partially enlarged cross-sectional view orthogonal to the longitudinal direction of a part of optical fibers among a plurality of optical fibers forming the optical fiber ribbon.
[FIG. 4] FIG. 4 is a cross-sectional view orthogonal to the longitudinal direction of an optical fiber cable according to a modification of the first embodiment.
[FIG. 5] FIG. 5 is a cross-sectional view orthogonal to the longitudinal direction of an optical fiber unit according to a second embodiment.
[FIG. 6] FIG. 6 is a schematic diagram showing an evaluation experiment for the water stopping property of an optical fiber cable.

### DESCRIPTION OF EMBODIMENTS

### Problem to be Solved by Present Disclosure

As an optical fiber mounted on an optical fiber cable, an optical fiber ribbon including a plurality of optical fibers and a connecting resin that connects the optical fibers arranged in parallel in a direction orthogonal to the longitudinal direction of the optical fibers is known. Water that has entered the cable may travel in the longitudinal direction along the connecting resin. In particular, when the optical fiber ribbon has a recess between the adjacent optical fibers, water may travel a longer distance along the recess.

An object of the present disclosure is to provide an optical fiber cable and an optical fiber unit that have higher waterproofness.

### Description of Embodiment of Present Disclosure

First, embodiments of the present disclosure will be listed and described.
(1) An optical fiber cable according to an aspect of the present disclosure including:
   a plurality of optical fiber ribbons;
   a plurality of water absorption members; and
   a sheath configured to cover peripheries of the plurality of optical fiber ribbons and the plurality of water absorption members,
   in which each of the optical fiber ribbons includes
      a plurality of optical fibers, and
      a connecting resin configured to connect the plurality of optical fibers arranged in parallel in a direction orthogonal to a longitudinal direction of the plurality of optical fibers,
   in which the connecting resin has at least one recess between the adjacent optical fibers, and
   in which a thickness of each of the water absorption members is smaller than a center-to-center distance between the two adjacent optical fibers in a parallel direction of the optical fibers.

According to the present disclosure, since the connecting resin of each of the optical fiber ribbons has at least one recess between the adjacent optical fibers, a part of the optical fibers can be easily separated from the optical fiber ribbon, and the optical fibers can be mounted in the cable. The water that has entered the optical fiber cable is likely to travel a long distance along the longitudinal direction by traveling along the recess. However, the thickness of each of the water absorption members according to the present disclosure is smaller than the center-to-center distance between the two adjacent optical fibers in the parallel direction of the optical fibers. Since the water absorption member is sized to easily enter the recess, water leakage in the cable can be prevented.

(2) In the above (1), the optical fiber ribbon may be an intermittent coupling type optical fiber ribbon in which, in a part or all of the plurality of optical fibers, a connecting portion in which the adjacent optical fibers are connected and a non-connecting portion in which the adjacent optical fibers are not connected are alternately provided in the longitudinal direction.

In a case in which the optical fiber ribbon is an intermittent coupling type optical fiber ribbon, the optical fiber ribbon can be accommodated in the optical fiber cable at a high density, and on the other hand, when there is a recess between the optical fibers, the water that has entered the optical fiber cable may travel a longer distance along the longitudinal direction by traveling along the recess. However, since the thickness of each of the water absorption members according to the present disclosure is smaller than the center-to-center distance, such water leakage can be prevented.

(3) In the above (1) or (2), each of the water absorption members may be twisted together with one or a plurality of the optical fiber ribbons.

According to the present disclosure, since each of the water absorption members is twisted together with one or a plurality of the optical fiber ribbons, the waterproofness in the circumferential direction of the cable can be improved as compared with a case in which the water absorption member is not twisted together with the optical fiber ribbon.

(4) In any one of the above (1) to (3),
each of the water absorption members may be formed by assembling a plurality of water absorption fibers, and
a diameter of the water absorption fiber may be 5 µm or more and 50 µm or less.

According to the present disclosure, since each of the water absorption members is formed by assembling a plurality of water absorption fibers and the diameter of the water absorption fiber is 5 µm or more and 50 µm or less, the water absorption members easily enter a space between the adjacent optical fibers or the recess, and the waterproofness of the cable can be improved.

(5) In any one of the above (1) to (3),
each of the water absorption members has a tape shape, and
in a cross section of the water absorption member, a thickness of a tape having the tape shape may be 250 µm or less, and a width of the tape having the tape shape may be 300 µm or more and 2500 µm or less.

According to the present disclosure, since each of the water absorption members has a tape shape in which the thickness of the tape is 250 µm or less and the width of the tape is 300 µm or more and 2500 µm or less in the cross section, the water absorption member easily enters a space between the adjacent optical fibers or the recess, and the waterproofness of the cable can be improved. Since the processing accuracy is not high as compared with a shape in which a plurality of water absorption fibers are assembled, the manufacturing cost can be reduced.

(6) In any one of the above (1) to (5),
the optical fiber cable may further include a plurality of optical fiber units each including one or a plurality of the optical fiber ribbons and a unit covering portion configured to cover the optical fiber ribbon, and
each of the water absorption members may be twisted together with one or a plurality of the optical fiber units.

According to the present disclosure, since each of the water absorption members is twisted together with one or a plurality of the optical fiber units, the waterproofness in the circumferential direction of the cable can be improved as compared with a case in which the water absorption member is not twisted together with the optical fiber unit.

(7) An optical fiber unit according to another aspect of the present disclosure including:
one or a plurality of optical fiber ribbons;
a plurality of water absorption members; and
a unit covering portion configured to cover peripheries of the one or the plurality of optical fiber ribbons and the plurality of water absorption members,
in which each of the optical fiber ribbons includes
   a plurality of optical fibers, and
   a connecting resin configured to connect the plurality of optical fibers arranged in parallel in a direction orthogonal to a longitudinal direction of the plurality of optical fibers,
in which the connecting resin has at least one recess between the adjacent optical fibers, and
in which a thickness of each of the water absorption members is smaller than a center-to-center distance between the two adjacent optical fibers in a parallel direction of the optical fibers.

According to the present disclosure, since the connecting resin of each of the optical fiber ribbons has at least one recess between the adjacent optical fibers, a part of the optical fibers can be easily separated from the optical fiber ribbon, and the optical fibers can be mounted in the unit. The water that has entered the optical fiber unit is likely to travel a long distance along the longitudinal direction by traveling along the recess. However, the thickness of each of the water absorption members according to the present disclosure is smaller than the center-to-center distance between the two adjacent optical fibers in the parallel direction of the optical fibers. Since the water absorption member is sized to easily enter the recess, water leakage in the unit can be prevented.

### Effects of Present Disclosure

According to the present disclosure, it is possible to provide an optical fiber cable and an optical fiber unit that have higher waterproofness.

### Details of Embodiment of Present Disclosure

A specific example of an optical fiber cable according to an embodiment of the present disclosure will be described with reference to the drawings.

The present disclosure is not limited to these exemplifications, but is indicated by the scope of claims, and is intended to include all modifications within a scope and meaning equivalent to the scope of claims.

### First Embodiment

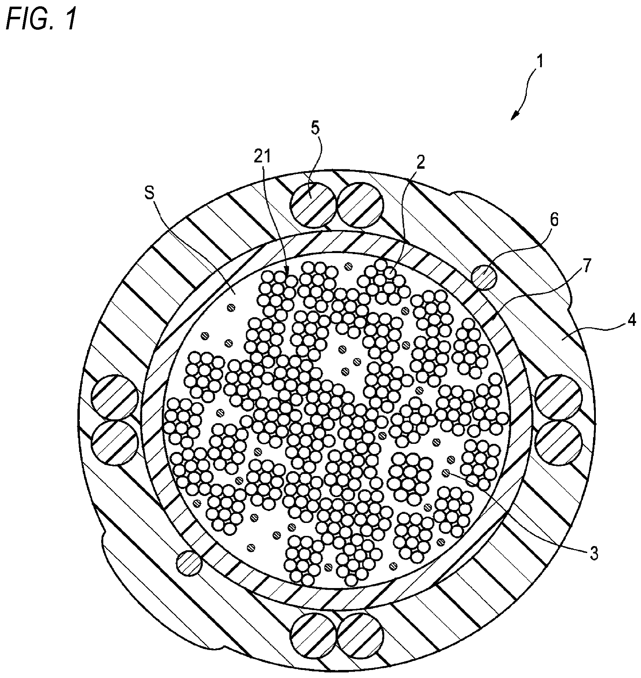

The configuration of an optical fiber cable 1 according to a first embodiment will be described with reference to FIG. 1.

FIG. 1 is a cross-sectional view orthogonal to the longitudinal direction of the optical fiber cable 1 according to the first embodiment. As shown in FIG. 1, the optical fiber cable 1 includes a plurality of optical fiber ribbons 21 formed of a plurality of optical fibers 2, a plurality of water absorption members 3, and a sheath 4. The optical fiber cable 1 according to the present embodiment is a slotless optical fiber cable. The plurality of optical fibers 2 and the plurality of water absorption members 3 are provided in a housing portion S inside the sheath 4. The outer diameter of the optical fiber cable 1 is, for example, 10 mm.

The optical fiber 2 forms the optical fiber ribbon 21. In the present embodiment, for example, 288 optical fiber ribbons 21 formed of 12 optical fibers 2 are housed in the housing portion S of the optical fiber cable 1. The plurality of optical fiber ribbons 21 may be twisted together to form an assembly, and the plurality of assemblies may be further twisted together. In this case, a bundling material may be wound around the assembly of the optical fiber ribbons 21. The plurality of optical fiber ribbons 21 may be housed in the housing portion S of the optical fiber cable 1 in a state in which the plurality of optical fiber ribbons 21 are stacked.

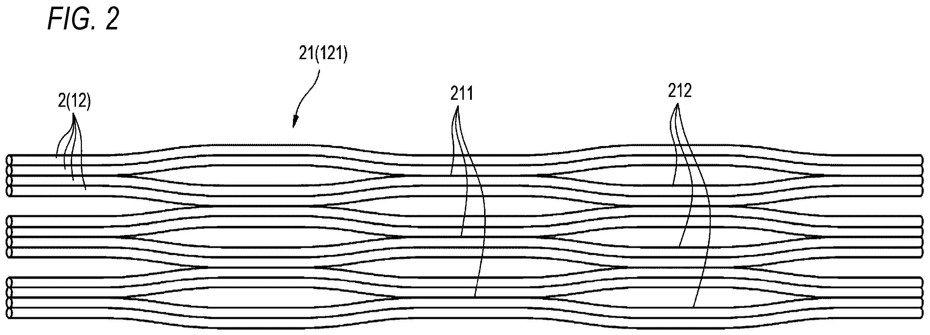

FIG. 2 is a partially exploded view showing the optical fiber ribbon 21 used in the optical fiber cable 1 in the longitudinal direction. As shown in FIG. 2, the optical fiber ribbon 21 has a configuration in which the plurality of optical fibers 2 are arranged in parallel in a direction orthogonal to the longitudinal direction thereof, and in which a part of the adjacent optical fibers 2 are connected to each other to form connecting portions 211. The connecting portions 211 are intermittently formed along the optical fiber 2, and the connecting portions 211 and non-connecting portions 212 are alternately formed along the optical fiber 2. In other words, the optical fiber ribbon 21 is an intermittent coupling type optical fiber ribbon. In the optical fiber ribbon 21, in a part or all of the plurality of optical fibers 2, the connecting portions 211 in which the adjacent optical fibers 2 are connected and the non-connecting portions 212 in which the adjacent optical fibers 2 are not connected are alternately provided in the longitudinal direction. The optical fiber 2 includes, for example, a glass fiber including a core and a cladding, and one or a plurality of coating layers covering the periphery of the glass fiber. The optical fiber 2 has an outer diameter of, for example, 180 µm or more and 250 µm or less.

Returning to FIG. 1, the description of the configuration of the optical fiber cable 1 will be continued. The water absorption member 3 is formed by assembling a plurality of water absorption fibers. The water absorption fibers are, for example, polyester fibers. As the polyester fiber, for example, a polyester fiber having a water absorption rate of 30 g/min or less for tap water is used. The water absorption rate indicates the amount of water that can be absorbed per minute. The diameter of the water absorption fiber according to the present embodiment is 5 µm or more and 50 µm or less. The water absorption member 3 is twisted together with one or a plurality of optical fiber ribbons 21.

The sheath 4 covers the periphery of the plurality of optical fiber ribbons 21 and the plurality of water absorption members 3. The sheath 4 is made of, for example, a hard resin having a relatively high Young's modulus such as high-density polyethylene. A plurality of tension members 5 and a plurality of tear strings 6 may be embedded in the sheath 4. The tension members 5 can be made of, for example, fiber reinforced plastic (FRP) such as aramid FRP, glass FRP, or carbon FRP, or a metal wire.

The optical fiber cable 1 according to the present embodiment may include a lid 7 provided between the sheath 4 and the plurality of optical fiber ribbons 21 and the plurality of water absorption members 3. The lid 7 covers the periphery of the plurality of optical fiber ribbons 21 and the plurality of water absorption members 3. The lid 7 is formed of, for example, a nonwoven fabric made of polyester or the like. The lid 7 may have water absorbency. When the lid 7 has water absorbency, the lid 7 is formed by, for example, adhering water absorption powder to a base fabric made of polyester or the like. The lid 7 can be longitudinally or spirally wrapped around the plurality of optical fiber ribbons 21. Being longitudinally wrapped means a state in which the lid 7 is wrapped around the optical fiber ribbons 21 such that the longitudinal direction of the lid 7 is parallel to the longitudinal direction of the optical fiber cable 1 and the width direction of the lid 7 is along the circumferential direction of the optical fiber cable 1.

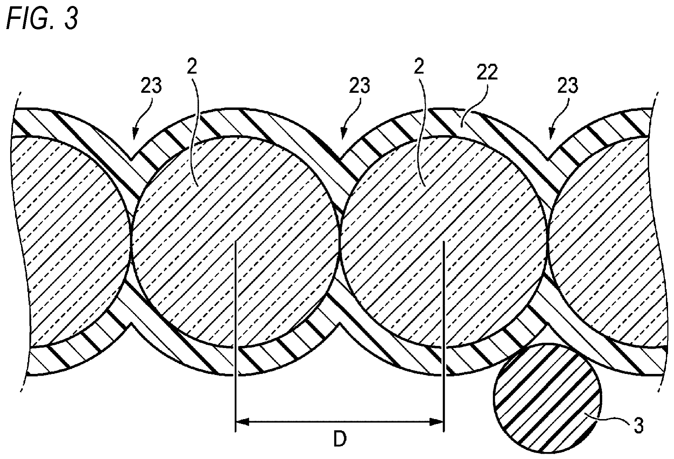

FIG. 3 is a partially enlarged cross-sectional view orthogonal to the longitudinal direction of a part of optical fibers 2 among the plurality of optical fibers 2 forming the optical fiber ribbon 21. As shown in FIG. 3, the optical fiber ribbon 21 includes a plurality of optical fibers 2 and a connecting resin 22.

The connecting resin 22 connects the plurality of optical fibers 2 arranged in parallel in a direction orthogonal to the longitudinal direction of the plurality of optical fibers 2. The connecting resin 22 covers the outer peripheries of the plurality of optical fibers 2. The connecting resin 22 is, for example, an ultraviolet curing resin. The connecting resin 22 may be a thermoplastic resin, an adhesive resin, or another coating resin.

A recess 23 is formed between the two adjacent optical fibers 2 of the connecting resin 22, and is a depression when the position of the top of the optical fiber 2 is used as a reference. As shown in FIG. 3, the recess 23 is formed in the connecting resin 22 covering the optical fiber 2. The recess 23 extends along the longitudinal direction of the optical fiber 2.

When the outer diameter of the optical fiber 2 is 250 µm, a center-to-center distance D between the two adjacent optical fibers 2 in the parallel direction of the optical fibers 2 is, for example, 244 µm or more and 256 µm or less, including the tolerance. The smaller the outer diameter of the optical fiber 2 is, the shorter the center-to-center distance D is. The plurality of optical fibers 2 shown in FIG. 3 are arranged in parallel so as to be in contact with each other. Alternatively, the connecting resin 22 may enter a space between the two adjacent optical fibers 2 so that the two optical fibers 2 are not in contact with each other, or the centers of the optical fibers 2 may be arranged slightly away from the parallel direction. When the connecting resin 22 is applied and formed so as to fill the depression formed between the two adjacent optical fibers 2, the depth of the recess 23 may be small. The depth of the recess 23 is, for example, 20 µm or more and 70 µm or less. The thickness (the diameter) of the water absorption member 3 according to the present embodiment is smaller than the center-to-center distance D.

As described above, the optical fiber cable 1 according to the present embodiment includes the plurality of optical fiber ribbons 21, and the optical fiber 2 can be mounted in the housing portion S of the optical fiber cable 1. Further, since the optical fiber ribbon 21 has at least one recess 23 in the connecting resin 22, it is easy to separate a part of the optical fibers 2 from the optical fiber ribbon 21, and handling becomes easy. The water that has entered the housing portion S of the optical fiber cable 1 is likely to travel a long distance by traveling along the recess 23 extending in the longitudinal direction of the optical fiber 2. However, the optical fiber cable 1 according to the present embodiment also includes the plurality of water absorption members 3, and the thickness (the diameter) of each water absorption member 3 is smaller than the center-to-center distance D between the two adjacent optical fibers 2 in the parallel direction of the optical fibers 2. Since the water absorption member 3 is sized to easily enter the recess 23, water leakage in the housing portion S can be prevented.

Since the optical fiber ribbons 21 according to the present embodiment are intermittent coupling type optical fiber ribbons, the optical fiber ribbons 21 can be more densely mounted in the housing portion S of the optical fiber cable 1. The water that has entered the housing portion S of an optical fiber cable 1A is likely to travel a long distance by traveling along the connecting portion 211 of the intermittent coupling type optical fiber ribbon. The entered water is likely to pass between the two adjacent optical fibers 2 in the non-connecting portion 212 and travel downward due to another unintended direction or gravity. However, since the water absorption member 3 according to the present embodiment is sized to easily enter the recess 23, even if the optical fiber ribbon 21 is an intermittent coupling type optical fiber ribbon, water leakage in the housing portion S can be prevented.

The water absorption member 3 according to the present embodiment is twisted together with one or a plurality of optical fiber ribbons 21. Therefore, as compared with a case in which the water absorption member 3 is not twisted together with the optical fiber ribbon 21, the water absorption member 3 is distributed evenly in the circumferential direction, and the waterproofness in the circumferential direction of the optical fiber cable 1 can be improved.

The water absorption member 3 according to the present embodiment is formed by assembling a plurality of water absorption fibers, the thickness (the diameter) of the water absorption fibers is 5 µm or more and 50 µm or less, and the thickness of the water absorption member 3 in which the water absorption fibers are assembled is smaller than the center-to-center distance D between the two adjacent optical fibers 2. Since the thickness (the diameter) of the water absorption member 3 is smaller than the center-to-center distance D as described above, the water absorption fibers of the water absorption member 3 easily enter the recess 23 of the optical fiber ribbon 21, and the waterproofness of the optical fiber cable 1 can be improved.

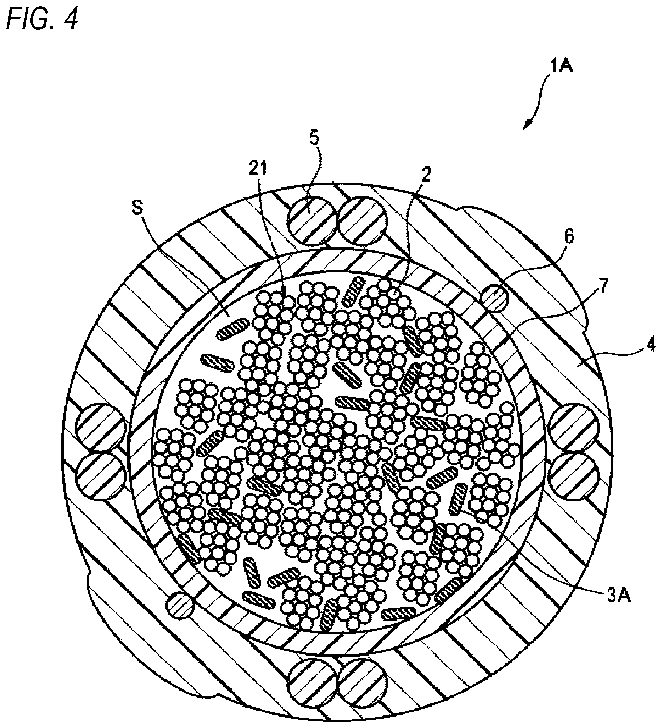

The water absorption member 3 according to the first embodiment is formed by assembling a plurality of water absorption fibers, but the form of the water absorption member 3 is not limited thereto. FIG. 4 is a cross-sectional view orthogonal to the longitudinal direction of the optical fiber cable 1A. The optical fiber cable 1A is a modification of the optical fiber cable 1 according to the first embodiment. In the configuration shown in FIG. 4, the same components as those shown in FIGS. 1 to 3 are denoted by the same reference signs, and the description thereof is omitted.

As shown in FIG. 4, the optical fiber cable 1A includes the plurality of optical fiber ribbons 21, a plurality of water absorption members 3A, and the sheath 4. The water absorption member 3A extends in the longitudinal direction of the optical fiber cable 1A. The water absorption member 3A has a tape shape. In the cross section of the water absorption member 3A, the thickness of the tape-shaped tape is 250 µm or less, and the width of the tape-shaped tape is 300 µm or more and 2500 µm or less. Here, the thickness of the tape is the sum of the dimension of the base fabric material (a nonwoven fabric tape, a PET tape, or the like) and the dimension of the water absorption material (water absorption polymer or the like) provided on the base fabric material. The width of the tape is the length of the tape in a direction perpendicular to the longitudinal direction of the optical fiber cable 1A and the thickness of the tape.

Since the water absorption member 3A has a tape shape and the thickness of the tape is 250 µm or less, the corner portions of the tape of the water absorption member 3A easily enter the recess 23 between the adjacent optical fibers 2. Therefore, the waterproofness of the optical fiber cable 1A can be improved. As compared to the water absorption member 3 having a shape in which a plurality of water absorption fibers are assembled, the water absorption member 3A having a tape shape does not need to have high processing accuracy, and thus the manufacturing cost can be reduced.

The optical fiber cable 1 or the optical fiber cable 1A may include a plurality of optical fiber units each including one or a plurality of optical fiber ribbons 21 and a unit covering portion that covers the optical fiber ribbon 21. The water absorption member 3 or the water absorption member 3A may be twisted together with one or a plurality of optical fiber units.

According to such a configuration, the waterproofness in the circumferential direction of the cable can be improved as compared with a case in which the water absorption member 3 or the water absorption member 3A is not twisted together with the optical fiber unit.

### Second Embodiment

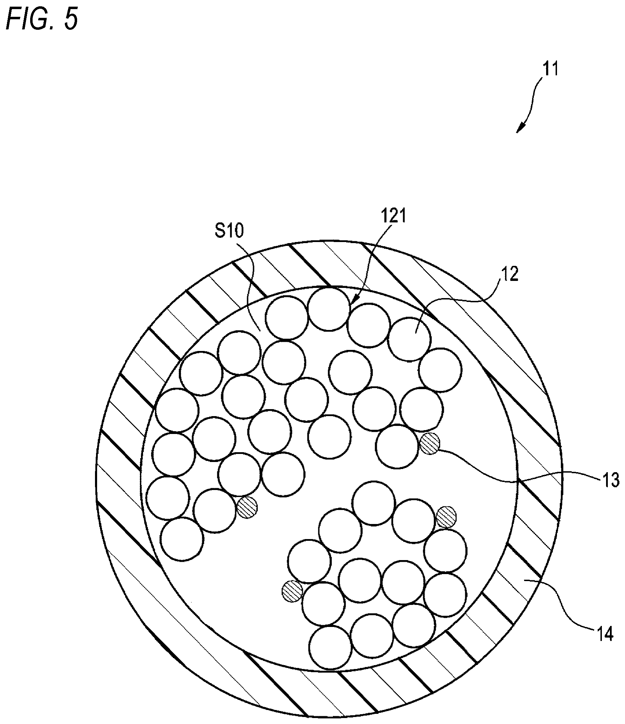

Although the optical fiber cable 1 or the optical fiber cable 1A has been described in the above embodiment, the configuration according to the present embodiment can be applied to an optical fiber cable other than the optical fiber cable 1 or the optical fiber cable 1A. FIG. 5 is a cross-sectional view orthogonal to the longitudinal direction of an optical fiber unit 11 according to a second embodiment. In the configuration shown in FIG. 5, the same components as those shown in FIGS. 1 to 4 are denoted by the same reference signs, and the description thereof is omitted.

As shown in FIG. 5, the optical fiber unit 11 includes a plurality of optical fiber ribbons 121 formed of a plurality of optical fibers 12, a plurality of water absorption members 13, and a unit covering portion 14. The plurality of optical fibers 12 and the plurality of water absorption members 13 are provided in a housing portion S10 inside the unit covering portion 14. The outer diameter of the optical fiber unit 11 is, for example, 3 mm.

The optical fiber 12 forms the optical fiber ribbon 121. The plurality of optical fiber ribbons 121 are bundled together by being twisted together. In this example, in the optical fiber unit 11, three optical fiber ribbons 121 formed of 12 optical fibers 12 are twisted together.

The optical fiber ribbon 121 is implemented similarly to the optical fiber ribbon 21 in FIG. 2. That is, the optical fiber ribbon 121 is an intermittent coupling type optical fiber ribbon. In the optical fiber ribbon 121, in a part or all of the plurality of optical fibers 12, the connecting portions 211 in which the adjacent optical fibers 12 are connected and the non-connecting portions 212 in which the adjacent optical fibers 12 are not connected are alternately provided in the longitudinal direction. The optical fiber 12 includes, for example, a glass fiber including a core and a cladding, and one or a plurality of coating layers covering the periphery of the glass fiber. The optical fiber 12 has an outer diameter of, for example, 180 µm or more and 250 µm or less.

The water absorption member 13 is formed by assembling a plurality of water absorption fibers, similarly to the water absorption member 3 described above. The water absorption fiber is, for example, polyester. As the polyester fiber, for example, a polyester fiber having a water absorption rate of 30 g/min or less for tap water is used. The diameter of the water absorption fiber according to the present embodiment is 5 µm or more and 50 µm or less. The water absorption member 3 is twisted together with one or a plurality of optical fiber ribbons 21.

The unit covering portion 14 covers the periphery of the plurality of optical fiber ribbons 121 and the plurality of water absorption members 13. The unit covering portion 14 can be made of, for example, a hard resin having a relatively high Young's modulus such as high-density polyethylene. For example, when a tear string (not shown) is embedded in the unit covering portion 14, the unit covering portion 14 may be made of a member having low strength and low elongation such that the unit covering portion 14 can be torn by the tear string.

As described above, the optical fiber unit 11 according to the present embodiment includes the optical fiber ribbon 121, and the optical fiber 12 can be mounted in the housing portion S10 of the optical fiber unit 11. Further, similarly to the optical fiber ribbon 21 according to the first embodiment, since the optical fiber ribbon 121 has at least one recess 23 in the connecting resin 22, it is easy to separate a part of the optical fibers 12 from the optical fiber ribbon 121, and handling becomes easy. The water that has entered the housing portion S10 of the optical fiber unit 11 is likely to travel a long distance along the longitudinal direction by traveling along the recess 23. However, the thickness of each water absorption member 13 according to the present embodiment is smaller than the center-to-center distance D between the two adjacent optical fibers 12 in the parallel direction of the optical fibers 12. Since the water absorption member 13 is sized to easily enter the recess 23, water leakage in the housing portion S10 can be prevented.

The optical fiber unit 11 may be mounted in the housing portion S of the optical fiber cable 1 or the optical fiber cable 1A. The water absorption member 3 or the water absorption member 3A may be twisted together with one or a plurality of optical fiber units 11. The optical fiber unit 11 may include one optical fiber ribbon 121 instead of a plurality of optical fiber ribbons.

Although the present disclosure has been described in detail with reference to the specific embodiments, it is apparent to those skilled in the art that various changes and modifications can be made without departing from the spirit and scope of the present disclosure. In addition, the number, positions, shapes, and the like of the constituent members described above are not limited to those in the embodiments described above, and can be changed to the numbers, positions, shapes, and the like suitable for carrying out the present disclosure.

The number of optical fibers 2 forming the optical fiber ribbon 21 and the number of optical fibers 12 forming the optical fiber ribbon 121 can be changed as appropriate.

### Evaluation Experiments

In the optical fiber cable 1 according to the first embodiment, a plurality of samples No. 4 to No. 6 having different diameters (thicknesses) of the water absorption member 3 were prepared. The diameter of the water absorption member of the sample No. 4 is 5 µm or more and 16 µm or less. The diameter of the water absorption member of the sample No. 4 is also the diameter of the water absorption fiber. The diameter of the water absorption member of the sample No. 5 is 190 µm or more and 200 µm or less. The diameter of the water absorption member of the sample No. 6 is 500 µm or more and 550 µm or less. Each of the water absorption members of the sample No. 5 and the water absorption member of the sample No. 6 is an assembly of water absorption fibers having a diameter of 5 µm or more and 16 µm or less. In the optical fiber cable 1A according to the modification, a plurality of samples No. 2, No. 3, and No. 7 having different widths of the tape of the water absorption member 3A were prepared. The thickness of the water absorption member 3A of the sample No. 2 is 250 µm, and the width thereof is 300 µm. The thickness of the water absorption member 3A of the sample No. 3 is 250 µm, and the width thereof is 1000 µm. The thickness of the water absorption member 3A of the sample No. 7 is 300 µm, and the width thereof is 3000 µm. As a comparative example, a sample No. 1 of an optical fiber cable not including the water absorption member 3 or the water absorption member 3A was also prepared. The outer diameter of the optical fiber 2 is 250 µm, and the center-to-center distance D between the two adjacent optical fibers 2 in the optical fiber ribbon 21 is 250 µm.

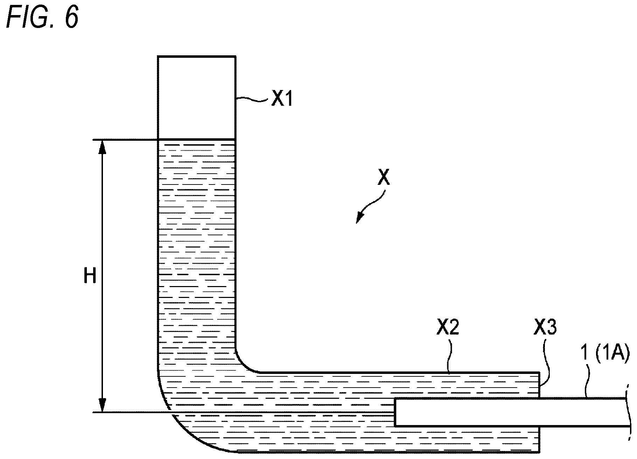

FIG. 6 is a schematic diagram showing an evaluation experiment for the water stopping property. As shown in FIG. 6, a hose X includes a cylindrical portion X1 that extends in the vertical direction and a cylindrical portion X2 that extends in the horizontal direction. The diameter of the hose X is larger than the diameters of the optical fiber cable 1 and the optical fiber cable 1A. A waterproof seal X3 is provided at the end portion of the cylindrical portion X2, which holds the cables and seals the hose X to prevent water stored in the hose X from leaking. Since the waterproof seal X3 is provided, the hose X can store liquid such as water or artificial seawater in the cylindrical portion X1 and the cylindrical portion X2.

In the evaluation experiment, first, the optical fiber cable serving as a sample is held at the end portion of the cylindrical portion X2, and tap water or artificial seawater is stored inside the hose X. At this time, a height H between the center point of the held optical fiber cable and the water surface of the cylindrical portion X1 is 1 m. In a state in which tap water or artificial seawater was stored inside the hose X, the samples were left at room temperature for 24 hours. Thereafter, the optical fiber cable was removed from the end portion of the cylindrical portion X2, and the length of the cable that was submerged in tap water or artificial seawater in the longitudinal direction was measured. When the length of the cable that was submerged in water was less than 3 m, the water stopping property was evaluated as good and was rated as A. On the other hand, when the length of the cable that was submerged in water was 3 m or more, the water stopping property was evaluated as not good and was rated as B. The measurement results are shown in Table 1.

**[Table 1]**

| | | Sample No. | | | | | | |
|---|---|---|---|---|---|---|---|---|
| | | 1 | 2 | 3 | 4 | 5 | 6 | 7 |
| | | No water absorption member | Tape shape thickness: 250 µm width: 300 µm | Tape shape thickness: 250 µm width: 1000 µm | Diameter of water absorption member 5 µm or more 16 µm or less | Diameter of water absorption member 190 µm or more 200 µm or less | Diameter of water absorption member 500 µm or more 550 µm or less | Tape shape thickness: 300 µm width: 3000 µm |
| Tap water | Length of cable that was submerged in water | 9 m | 1.5 m | 1.3 m | 1.1 m | 1.5 m | 3.5 m | 4.6 m |
| | Evaluation | B | A | A | A | A | B | B |
| Artificial seawater | Length of cable that was submerged in water | 15 m | 2.6 m | 2.3 m | 2.5 m | 2.6 m | 6 m | 8 m |
| | Evaluation | B | A | A | A | A | B | B |

As shown in Table 1, in the sample No. 1 including no water absorption member, the length of the cable that was submerged in water was 9 m in the case of tap water and 15 m in the case of artificial seawater, and the water stopping property was evaluated as B.

In the sample No. 6 including a relatively thick water absorption member having a diameter of 500 µm or more and 550 µm or less, the length of the cable that was submerged in water was 3.5m in the case of tap water and 6 m in the case of artificial seawater, and the water stopping property was evaluated as B. On the other hand, in both the sample No. 4 including the water absorption member having a diameter of 5 µm or more and 16 µm or less and the sample No. 5 including the water absorption member having a diameter of 190 µm or more and 200 µm or less, the length of the cable that was submerged in water was less than 3 m, and high water stopping properties were confirmed as being evaluated as A.

In the sample No. 7 including a relatively thick and wide tape-shaped water absorption member having a tape thickness of 300 µm and a tape width of 3000 µm, the length of the cable that was submerged in water was 4.6 m in the case of tap water and 8 m in the case of artificial seawater, and the water stopping property was evaluated as B. On the other hand, in both the sample No. 2 including a tape-shaped water absorption member having a tape thickness of 250 µm and a tape width of 300 µm and the sample No. 3 including a tape-shaped water absorption member having a tape thickness of 250 µm and a tape width of 1000 µm, the length of the cable that was submerged in water was less than 3 m, and high water stopping properties were confirmed as being evaluated as A.

According to the evaluation experiment in Table 1, the samples having good water stopping properties were No. 2 to No. 5. Accordingly, it was found that when the optical fiber cable includes a water absorption member having a diameter of 5 µm or more and 200 µm or less, or when the optical fiber cable includes a tape-shaped water absorption member having a thickness of 250 µm and a width of 300 µm or more and 1000 µm or less, the water stopping property is good.

### REFERENCE SIGNS LIST

1, 1A: optical fiber cable
2: optical fiber
3, 3A: water absorption member
4: sheath
5: tension member
6: tear string
7: lid
11: optical fiber unit
12: optical fiber
13: water absorption member
14: unit covering portion
21: optical fiber ribbon
22: connecting resin
23: recess
121: optical fiber ribbon
211: connecting portion
212: non-connecting portion
S, S10: housing portion

## Claims

1. An optical fiber cable comprising:
a plurality of optical fiber ribbons;
a plurality of water absorption members; and
a sheath configured to cover peripheries of the plurality of optical fiber ribbons and the plurality of water absorption members,
wherein each of the optical fiber ribbons includes
a plurality of optical fibers, and
a connecting resin configured to connect the plurality of optical fibers arranged in parallel in a direction orthogonal to a longitudinal direction of the plurality of optical fibers,
wherein the connecting resin has at least one recess between the adjacent optical fibers, and
wherein a thickness of each of the water absorption members is smaller than a center-to-center distance between the two adjacent optical fibers in a parallel direction of the optical fibers.

2. The optical fiber cable according to claim 1,
wherein the optical fiber ribbon is an intermittent coupling type optical fiber ribbon in which, in a part or all of the plurality of optical fibers, a connecting portion in which the adjacent optical fibers are connected and a non-connecting portion in which the adjacent optical fibers are not connected are alternately provided in the longitudinal direction.

3. The optical fiber cable according to claim 1 or 2,
wherein each of the water absorption members is twisted together with one or a plurality of the optical fiber ribbons.

4. The optical fiber cable according to any one of claims 1 to 3,
wherein each of the water absorption members is formed by assembling a plurality of water absorption fibers, and
wherein a diameter of the water absorption fiber is 5 µm or more and 50 µm or less.

5. The optical fiber cable according to any one of claims 1 to 3,
wherein each of the water absorption members has a tape shape, and
wherein, in a cross section of the water absorption member, a thickness of a tape having the tape shape is 250 µm or less, and a width of the tape having the tape shape is 300 µm or more and 2500 µm or less.

6. The optical fiber cable according to any one of claims 1 to 5, further comprising
a plurality of optical fiber units each including one or a plurality of the optical fiber ribbons and a unit covering portion configured to cover the optical fiber ribbon,
wherein each of the water absorption members is twisted together with one or a plurality of the optical fiber units.

7. An optical fiber unit comprising:
one or a plurality of optical fiber ribbons;
a plurality of water absorption members; and
a unit covering portion configured to cover peripheries of the one or the plurality of optical fiber ribbons and the plurality of water absorption members,
wherein each of the optical fiber ribbons includes
a plurality of optical fibers, and
a connecting resin configured to connect the plurality of optical fibers arranged in parallel in a direction orthogonal to a longitudinal direction of the plurality of optical fibers,
wherein the connecting resin has at least one recess between the adjacent optical fibers, and
wherein a thickness of each of the water absorption members is smaller than a center-to-center distance between the two adjacent optical fibers in a parallel direction of the optical fibers.
